# EUROPEAN PATENT APPLICATION

(11) **EP 4 681 989 A1**
(43) Date of publication of application: **21.01.2026**
(21) Application number: 25186947.5
(22) Date of filing: 02.07.2025
(51) Int. Cl.: B60R 1/02, B60R 16/037

(54) **VEHICLE MIRROR POSITIONING SYSTEM FOR INCREASED VISIBILITY**

(30) Priority: 17.07.2024 US 202418776112
(71) Applicant: Harman Becker Automotive Systems, Inc., Novi, MI 48377 (US)
(72) Inventor: KORTI, Pramod Bheemasen, Novi, MI, 48377 (US)
(74) Representative: Westphal, Mussgnug & Partner, Patentanwälte mbB

(57) **Abstract**

An automated mirror positioning system for a vehicle is disclosed, which may adjust the positions of the one or more rear view mirrors (150, 212, 306) to default positions that maximize the visibility of the rear environment for the driver based on characteristics of the driver inferred by a configuration of a seat of the driver (210), including a height, position, and inclination of the seat, as well as from images captured from an in-cabin camera . If the default position is not ideal, the mirrors (150, 212, 306) may be adjusted automatically by an AI model based on movements made by the driver to obtain an ideal rear view. In another embodiment, explicit input may be provided via an eye gaze of the driver, where the eye gaze of the driver is captured and detected using an in-cabin camera, and the mirrors are adjusted based where in the mirror the driver is looking.

## Description

### TECHNICAL FIELD

Embodiments of the subject matter disclosed herein relate to increasing visibility of a driver of a vehicle.

### BACKGROUND

When operating a vehicle, a driver may view elements of a rear environment of the vehicle in one or more rear view mirrors. The rear view mirrors may include an inside rear view mirror, outside rear view mirrors mounted on sides of the vehicle, or a different type of rear view mirror. A safety of the driver while operating the vehicle may be increased by the driver frequently or regularly checking the rear view mirrors.

A view of the rear environment provided by the one or more rear view mirrors may be smaller or more obstructed than desired due to a positioning of the one or more rear view mirrors. If a rear view mirror is poorly positioned with respect to the driver's head or eyes, a visibility of a rear view of the vehicle may be less than desired. When the rear view mirror is poorly positioned, the driver may adjust a position of the rear view mirror to increase the visibility. The rear view mirror may be adjusted manually via mechanical, electronic, or virtual controls in an interior of the vehicle, such as on a dashboard of the vehicle or on doors of the vehicle. However, manual adjustment of the rear view mirror may be cumbersome and time consuming, and the driver may neglect to adjust the mirrors prior to operating the vehicle. Additionally, the driver may not notice that the rear view mirror is poorly positioned until after beginning to operate the vehicle. Manually adjusting the rear view mirror while operating the vehicle may include moving a hand of the driver off of a steering wheel, gear shift, or other control element of the vehicle, which may reduce the safety of the driver.

### SUMMARY

The current disclosure at least partially addresses one or more of the above identified issues by an automatic mirror positioning system of a vehicle, comprising a processor, and instructions stored in a memory of the vehicle that when executed, cause the processor to, when a driver of the vehicle is seated in the vehicle, receive a driver-selected seat position and a weight of the driver from sensors of a seat of a driver of the vehicle; adjust one or more rear view mirrors of the vehicle to default mirror positions for the driver based on the received driver-selected seat position and weight, the default mirror positions increasing a size of an unobstructed portion of a rear environment of the driver and/or vehicle for an average driver having the received driver-selected seat position and received weight; and in response to receiving a selection of an automatic mirror adjustment mode of the vehicle by the driver, further adjust the one or more rear view mirrors based on a visual input of the driver captured by an in-camera vehicle.

The above advantages and other advantages, and features of the present description will be readily apparent from the following Detailed Description when taken alone or in connection with the accompanying drawings. It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

Various aspects of this disclosure may be better understood upon reading the following detailed description and upon reference to the drawings in which:
FIG. 1 is a schematic diagram of a vehicle, according to one or more embodiments of the disclosure;
FIG. 2 is a schematic diagram showing components of a vehicle used to adjust one or more mirrors of the vehicle, according to one or more embodiments of the disclosure;
FIG. 3 is an eye gaze diagram that depicts a positioning of various mirrors of a vehicle from the perspective of a driver of the vehicle, according to one or more embodiments of the disclosure;
FIG. 4 is a flowchart illustrating an exemplary high-level method for automatically adjusting an orientation of a plurality of rear and side view mirrors of a vehicle for a driver, according to one or more embodiments of the disclosure;
FIG. 5 is a flowchart illustrating an exemplary method for adjusting a mirror of a vehicle based on a head tracking model, according to one or more embodiments of the disclosure;
FIG. 6 is a flowchart illustrating an exemplary method for adjusting a mirror of a vehicle based on an eye gaze of the driver, according to one or more embodiments of the disclosure;
FIG. 7 is a depiction of a mirror of a vehicle, according to one or more embodiments of the disclosure; and
FIG. 8 is a timing diagram depicting a sequence of actions performed by a driver to adjust a position of one or more rear view mirrors of a vehicle, according to one or more embodiments of the disclosure.

The drawings illustrate specific aspects of the described systems and methods. Together with the following description, the drawings demonstrate and explain the structures, methods, and principles described herein. In the drawings, the size of components may be exaggerated or otherwise modified for clarity. Well-known structures, materials, or operations are not shown or described in detail to avoid obscuring aspects of the described components, systems, and methods.

### DETAILED DESCRIPTION

Systems and methods for increasing a visibility of a rear environment of a vehicle are disclosed herein, by providing a driver of the vehicle with an efficient procedure for adjusting one or more rear/side view mirrors of the vehicle. The safety of the driver may depend on being able to quickly and efficiently monitor activity outside the vehicle, in particular, behind the vehicle, as well as within a cabin of the vehicle. In some circumstances, the driver may not pay attention to positions of the one or more rear view mirrors when initiating operation of the vehicle. This may be partially due to the time and effort that it takes to adjust the positions of the mirrors to desired positions. As a result, the driver may have one or more "blind spots" with respect to the rear environment, meeting, areas behind or around the driver and/or vehicle that cannot be seen via the rear view mirrors without adjusting a position of a head of the driver. The occurrence of such blind spots may decrease a safety of the driver.

Inability of the driver to position the rear view mirrors to eliminate or reduce the blind spots may depend on a level of experience of the driver, where inexperienced drivers may operate the vehicle with larger blind spots then more experienced drivers. Further, the inexperienced drivers may not be aware of a size or positioning of the blind spots. When a driver becomes aware of a blind spot or of limited visibility via the rear view mirrors, the driver may adjust the positions of one or more of the rear view mirrors. However, adjusting the positions of the one or more rear view mirrors may entail making manual adjustments with the driver's hands at a time when the driver is operating the vehicle, which may reduce a safety of the driver. Alternatively, the driver may not perform the manual adjustments, and may continue to operate the vehicle with the poor visibility, which may also reduce the safety of the driver.

To address this problem, inventors herein propose an automated or partially automated mirror positioning system for a vehicle, which may adjust the positions of the one or more rear view mirrors to default positions that maximize the visibility of the rear environment for the driver based on characteristics of the driver, such as height, weight, or size, which may be inferred by a configuration of a seat of the driver, including a height, position, and inclination of the seat, as well as from images captured from an in-cabin camera. For the purposes of this disclosure, maximizing the visibility of the rear environment includes increasing a size of an unobstructed portion of the rear environment visible via the one or more rear view mirrors.

If the default position is not ideal for a driver, the driver may select an automatic mirror adjustment mode, wherein the mirrors are adjusted automatically by an AI model based on a visual input of the driver captured by an in-camera vehicle. The visual input may include movements made by the driver to obtain an ideal rear view, which are captured in images taken by the in-camera vehicle (e.g., such as a driver monitoring system (DMS) camera). For example, the driver may adjust a position of their head and face to obtain a desired view of the rear environment via a mirror. Images of the adjustment may be captured by the in-cabin camera, which may be processed by the AI model to determine an adjustment to an orientation of the mirror such that the driver can obtain the desired view without adjusting the position of their head. In another embodiment, the visual input may include a direction of an eye gaze of the driver, where the eye gaze of the driver is captured and detected via one or more in-cabin cameras, and the mirrors are adjusted based on an edge of a mirror at which the gaze is detected. For example, if the driver focuses the eye gaze at a left edge of the mirror, the mirror may be incrementally rotated to the left.

In this way, vehicle rear view mirrors may be automatically adjusted, meaning, without relying on a manual manipulation of controls by a driver, for drivers of different heights and sizes. The rear view mirrors may be adjusted more rapidly and with less effort than by selecting and manipulating physical or virtual controls of the vehicle. Further, the rear view mirrors may be adjusted during operation of the vehicle in a manner that does not rely on a use of a driver's hand, and while the driver is using a rear view mirror during operation of the vehicle. As a result, driver safety may be increased, and a risk of vehicle accidents may be decreased.

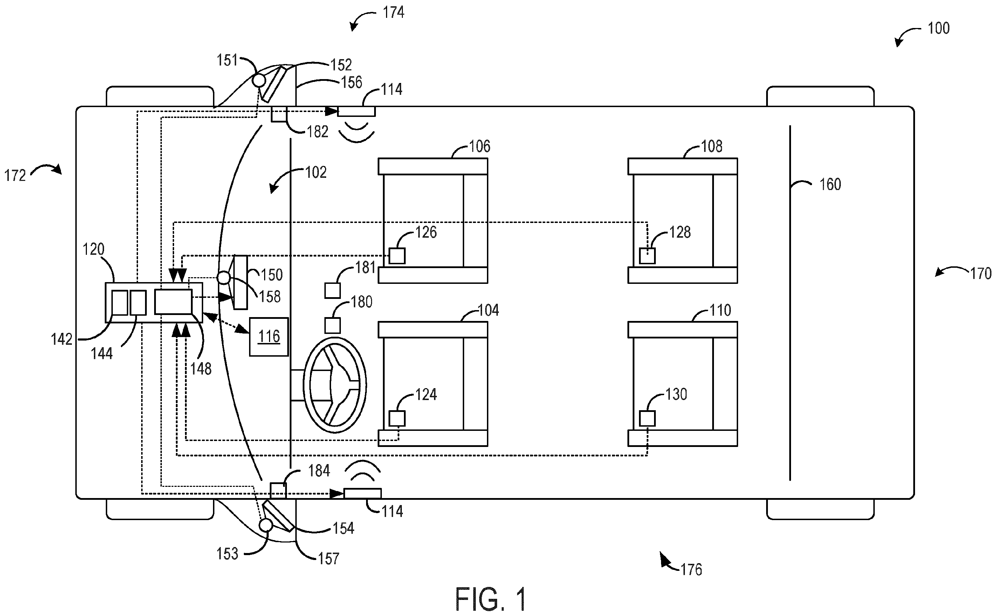

Turning now to the figures, FIG. 1 schematically shows an exemplary vehicle 100. The vehicle 100 includes a dashboard 102, a driver seat 104, a first passenger seat 106, a second passenger seat 108, and a third passenger seat 110. In other examples, the vehicle 100 may include more or fewer passenger seats. The driver seat 104 and the first passenger seat 106 are located in a front of the vehicle, proximate to the dashboard 102, and therefore may be referred to as front seats. The second passenger seat 108 and the third passenger seat 110 are located at a rear of the vehicle and may be referred to as back (or rear) seats.

Vehicle 100 includes a plurality of integrated speakers 114, which may be arranged around a periphery of the vehicle 100. In some embodiments, the integrated speakers 114 may be integrated into seats (e.g., headrests) of vehicle 100. The integrated speakers 114 may be electronically coupled to an electronic control system of the vehicle, such as to a computing system 120, via a wired connection. In other embodiments, the integrated speakers 114 may wirelessly communicate with the computing system 120. As an example, an audio file may be generated by computing system 120 or selected by an occupant of the vehicle 100, and the selected audio file may be played at one or more of the integrated speakers 114. In some examples, audio alerts may be generated by the computing system 120 and also may be played at the integrated speakers 114. In some embodiments, audio files, signals, and/or alerts may be selected by or generated for an occupant of vehicle 100, and may be played an integrated speaker 114 associated with and/or proximal to a seat of the occupant. Further, in some embodiments, audio files, signals, and/or alerts selected by or generated for the occupant may be played at an integrated speaker 114 associated with and/or proximal to a seat of one or more other occupants of vehicle 100.

The vehicle 100 may further include a driver seat sensor 124 coupled to or within the driver seat 104 and a passenger seat sensor 126 coupled to or within the first passenger seat 106. The back seats may also include seat sensors, such as a passenger seat sensor 128 coupled to the second passenger seat 108 and a passenger seat sensor 130 coupled to the third passenger seat 110. The driver seat sensor 124 and the passenger seat sensor 126 may each include one or a plurality of sensors, such as a weight sensor, a pressure sensor, and one or more seat position sensors that output a measurement signal to the computing system 120. For example, the output of the weight sensor or pressure sensor may be used by the computing system 120 to determine whether or not the respective seat is occupied, and if occupied, a weight of a person occupying the seat. As another example, the output of the one or more seat position sensors may be used by the computing system 120 to determine one or more of an occupant of vehicle 100, a seat height, a longitudinal position with respect to the dashboard 102 and the back seats, and an angle (e.g., tilt) of a seat back of a corresponding seat.

Computing system 120 may include a user interface (UI) 116. Computing system 120 may receive inputs via UI 116 as well as output information to UI 116. The user interface 116 may be included in a digital cockpit, for example, and may include a display and one or more input devices. The one or more input devices may include one or more touchscreens, knobs, dials, hard buttons, and soft buttons for receiving user input from a vehicle occupant. UI 116 may include a display screen on which information, images, videos, and the like may be displayed. The display screen may be a touchscreen, and an occupant of vehicle 100 may interact with UI 116 via control elements displayed on the display screen.

Computing system 120 includes a processor 142 configured to execute machine readable instructions stored in a memory 144. The processor 142 may be single core or multi-core, and the programs executed by processor 142 may be configured for parallel or distributed processing. In some embodiments, the processor 142 is a microcontroller. The processor 142 may optionally include individual components that are distributed throughout two or more devices, which may be remotely located and/or configured for coordinated processing. In some embodiments, one or more aspects of the processor 142 may be virtualized and executed by remotely-accessible networked computing devices configured in a cloud computing configuration. For example, the computing system 120 may be communicatively coupled with a wireless network.

Computing system 120 may communicate with networked computing devices via short-range communication protocols, such as Bluetooth^{®}. In some embodiments, the computing system 120 may include other electronic components capable of carrying out processing functions, such as a digital signal processor, a field-programmable gate array (FPGA), or a graphic board. In some embodiments, the processor 142 may include multiple electronic components capable of carrying out processing functions. For example, the processor 142 may include two or more electronic components selected from a plurality of possible electronic components, including a central processor, a digital signal processor, a field-programmable gate array, and a graphics board. In still further embodiments, the processor 142 may be configured as a graphical processing unit (GPU), including parallel computing architecture and parallel processing capabilities.

Further, the memory 144 may include any non-transitory tangible computer readable medium in which programming instructions are stored. As used herein, the term "tangible computer readable medium" is expressly defined to include any type of computer readable storage. The example methods described herein may be implemented using coded instruction (e.g., computer readable instructions) stored on a non-transitory computer readable medium such as a flash memory, a read-only memory (ROM), a random-access memory (RAM), a cache, or any other storage media in which information is stored for any duration (e.g. for extended period time periods, permanently, brief instances, for temporarily buffering, and/or for caching of the information).

Computer memory of computer readable storage mediums as referenced herein may include volatile and non-volatile or removable and non-removable media for a storage of electronically formatted information, such as computer readable program instructions or modules of computer readable program instructions, data, etc. that may be stand-alone or as part of a computing device. Examples of computer memory may include any other medium which can be used to store the desired electronic format of information and which can be accessed by the processor or processors or at least a portion of a computing device. In various embodiments, the memory 144 may include an SD memory card, an internal and/or external hard disk, USB memory device, or a similar modular memory.

Vehicle 100 includes a rear view mirror 150, which may allow a driver of vehicle 100 to view portions of a cabin of the vehicle behind the driver and portions of a rear environment 170 behind vehicle 100 through a back windshield 160 of vehicle 100 (referred to herein as a rear view). However, the rear view of the driver may be obstructed by portions of vehicle 100 that surround the back windshield 160, seats 108 and 110, and/or occupants of seats 108 and 110. Vehicle 100 also includes a right side mirror 152 on a right side 174 of the vehicle 100, and a left side mirror 154 on a left side 176 of vehicle 100, which may increase a visibility (e.g., a field of view, a depth of view, or an amount of unblocked view) of the rear view of the driver. Specifically, right side mirror 152 may provide greater visibility of a right side portion of the rear view, and left side mirror 154 may provide greater visibility of a left side portion of the rear view. For the purposes of this disclosure, the rear view mirror 150, the right side mirror 152, and the left side mirror 154 may all be collectively referred to as rear view mirrors.

The driver's visibility of the rear view may depend on a positioning of rear view mirror 150, right side mirror 152, and left side mirror 154. That is, mirrors 150, 152, and 154 may all be adjustable, such that the driver may adjust each of rear view mirror 150, right side mirror 152, and left side mirror 154 to maximize or increase a size of an unobstructed portion of the rear view. For example, the driver may adjust the rear view mirror 150 from a first position to a second position, where the second position of the rear view mirror 150 provides a clearer or greater view of the driver's rear environment, including rear environment 170. The second position may be based on a height of the driver and/or a position of the seat 104 of the driver.

Similarly, the driver may adjust the right side mirror 152 from a first position to a second position, where the second position of the right side mirror 152 provides a clearer or greater view of the right side portion of the driver's rear environment, and the driver may adjust the left side mirror 154 from a first position to a second position, where the second position of the left side mirror 154 provides a clearer or greater view of the left side portion of the driver's rear environment. The second position of the right side mirror 152 and the second position of the left side mirror 154 may also be based on a height of the driver and/or a position of the seat 104 of the driver.

For example, the vehicle 100 may be operated by two different drivers of different heights. When a first driver operates the vehicle, the first driver may adjust seat 104 to a first seat position, based on a first height of the first driver. The first driver may adjust the position of one or more of the rear view mirror 150, the right side mirror 152, and the left side mirror 154 to maximize the first driver's visibility of the rear view of the vehicle. At a later time, a second driver may operate vehicle 100. When the second driver operates the vehicle 100, the second driver may adjust seat 104 to a second seat position, based on a second height of the second driver. The second driver may adjust the position of one or more of the rear view mirror 150, the right side mirror 152, and the left side mirror 154 to maximize the second driver's visibility of the rear view of the vehicle.

The right side mirror 152 and the left side mirror 154 may be adjusted from their respective first positions to their respective second positions via a right side mirror control system 151 and a left side mirror control system 153, respectively. The left side mirror control system 153 may be included in a mirror housing 156, and may be mechanically or electrically coupled to the right side mirror 152. The right side mirror control system 151 may be included in a mirror housing 157, and may be mechanically or electrically coupled to left side mirror 154. Each of the right side mirror control system 151 and the left side mirror control system 153 may be electrically coupled to the computing system 120, and the driver may adjust the positions of the right side mirror 152 and the left side mirror 154 via dashboard controls of vehicle 100 (e.g., via UI 116). That is, the driver may select and manipulate one or more controls for adjusting the right side mirror 152 and the left side mirror 154 on dashboard 102, a door of the vehicle 100, or at a different location. In response to the driver selection and manipulation, electrical signals may be generated at the computing system 120 and sent to the right side mirror control system 151 and the left side mirror control system 153. The right side mirror control system 151 and the left side mirror control system 153 may actuate the right side mirror 152 and the left side mirror 154, respectively, based on the electrical signals. The electrical signals may encode instructions to adjust a position (e.g., an angle of orientation in two or three dimensions) of the right side mirror 152 and/or the left side mirror 154 to a position desired by the driver. The electrical signals may also encode instructions to adjust the position of the right side mirror 152 and/or the left side mirror 154 incrementally in a direction desired by the driver.

Additionally, vehicle 100 may include a rear view mirror control system 158 disposed at the rear view mirror 150, which may receive electrical signals from the computing system 120 and actuate the rear view mirror 150 to control a position of the rear view mirror 150, in a manner similar to the right side mirror 152 and the left side mirror 154.

Additionally or alternatively, although not depicted in FIG. 1, the right side mirror control system 151 and/or the left side mirror control system 153 may be controlled to adjust a position of the right side mirror 152 and/or the left side mirror 154, respectively, via manual controls installed at mirror housing 156 and mirror housing 157, respectively.

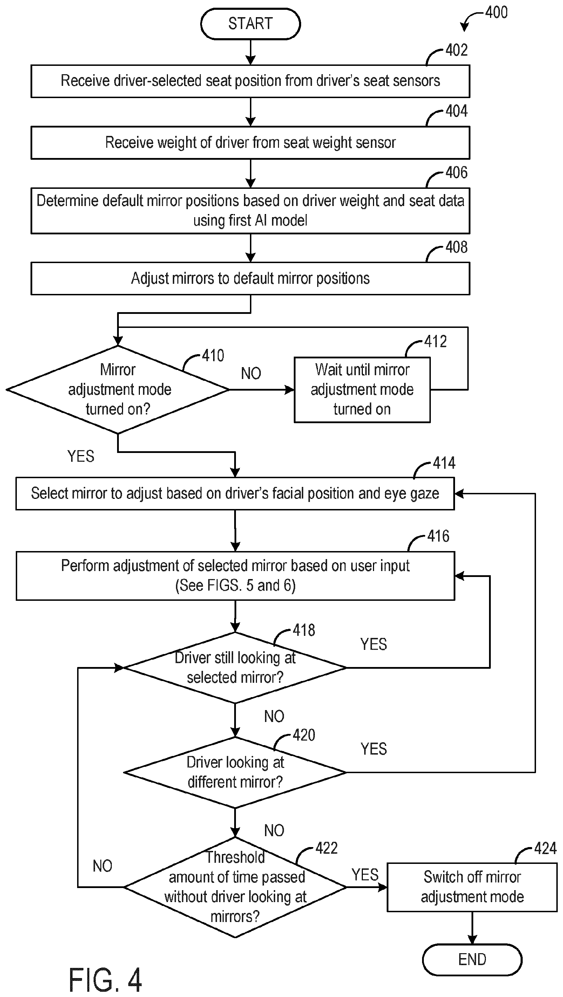

To aid the driver (e.g., the first driver and/or the second driver) in maximizing the driver's view of the rear environment 170 of the vehicle 100, the computing system 120 may include an automatic mirror positioning system 148, which may be configured to adjust one or more of the rear view mirror 150, the right side mirror 152, and the left side mirror 154 in an automated or partially automated fashion, as described in greater detail herein. The automatic mirror positioning system 148 may automatically adjust one or more of the rear view mirror 150, the right side mirror 152, and the left side mirror 154 to a default setting for the driver that may increase a size of (e.g., maximize) an unobstructed portion of the driver's rear view. In some embodiments, the automatic mirror positioning system 148 may detect, estimate, or predict a position of a head of the driver, and based on the position of the head, the automatic mirror positioning system 148 may adjust one or more of the rear view mirror 150, the right side mirror 152, and the left side mirror 154 to maximize the driver's rear view. The automatic mirror positioning system 148 may detect, estimate, or predict the position of the head of the driver based on an estimate of the driver's size, where the driver's size may be estimated based on data received from sensors of seat 104 (e.g., sensor 124). The data may include a weight of the driver collected via a weight sensor, and a position, height, and/or angle of seat 104. Additionally or alternatively, the position of the driver's head may be estimated based on an image captured via an in-cabin camera 180 of the vehicle, where in-cabin camera 180 may be integrated into the dashboard 102, or a ceiling of the cabin, or installed at a different location. Additionally, an in-cabin microphone 181 may be integrated into vehicle 100 in a similar fashion, which may receive voice commands from the driver. Adjusting the one or more of the rear view mirror 150, the right side mirror 152, and the left side mirror 154 to the default positions is described in greater detail below in reference to FIG. 4.

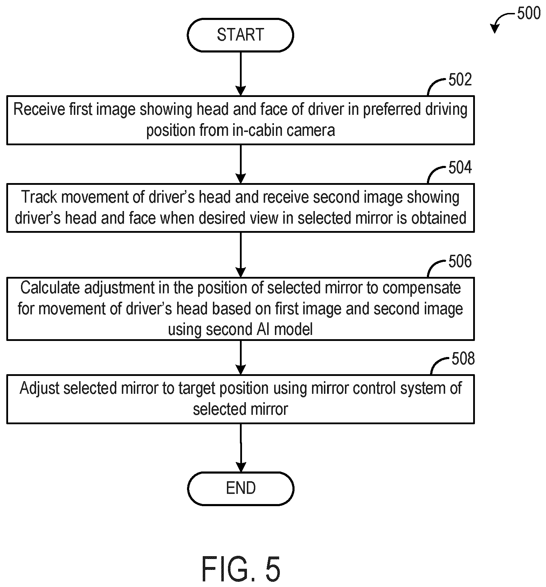

If the driver is not satisfied with the default positions of the mirrors established by the automatic mirror positioning system 148, the automatic mirror positioning system 148 may be configured to receive instructions from the driver regarding how one or more of the rear view mirror 150, the right side mirror 152, and the left side mirror 154 may be further adjusted to the driver. The driver may select an automatic mirror adjustment mode, wherein driver input (e.g., instructions) may be provided to the automatic mirror positioning system 148 in a non-manual, non-intrusive manner that indicates how the one or more of the rear view mirror 150, the right side mirror 152, and the left side mirror 154 may be further adjusted to obtain a desired view of the driver. In some embodiments, an AI model, such as a machine learning (ML) or deep learning (DL) model, may be trained to recognize movements of the driver's head as the driver adjusts their head to obtain the desired view from camera 180, and output a desired orientation of the one or more of the rear view mirror 150, the right side mirror 152, and the left side mirror 154 based on the movements. The one or more of the rear view mirror 150, the right side mirror 152, and the left side mirror 154 may then be adjusted to the desired orientation(s) by a respective control system 151, 153, or 158. Adjusting the one or more of the rear view mirror 150, the right side mirror 152, and the left side mirror 154 using the AI model is described in greater detail below in reference to FIG. 5.

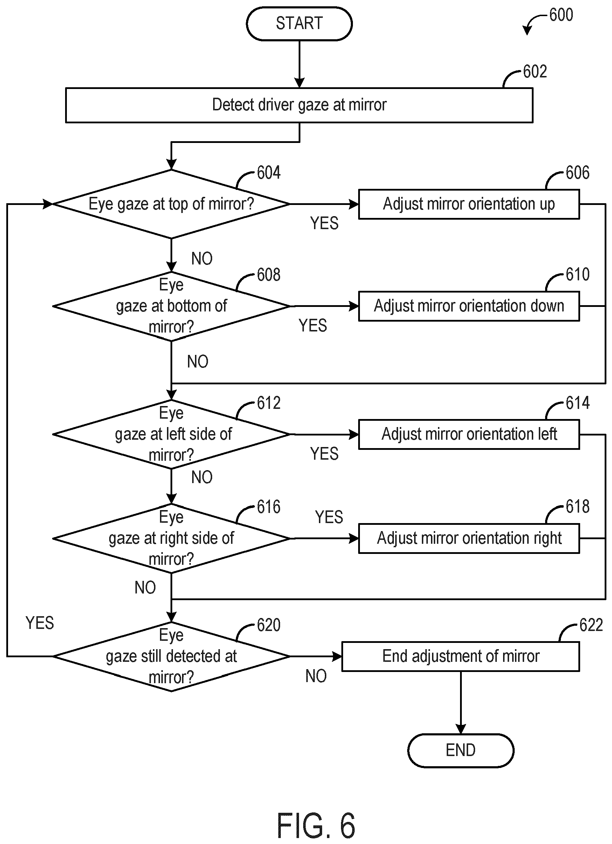

In other embodiments, instructions for adjusting the orientation of the one or more of the rear view mirror 150, the right side mirror 152, and the left side mirror 154 may be conveyed to the automatic mirror positioning system 148 via an eye gaze of the driver captured by one or more in-cabin cameras positioned at the rear view mirror 150, the right side mirror 152, and the left side mirror 154. That is, eye gaze information with instructions for adjusting the position of the rear view mirror 150 may be captured by camera 180; eye gaze information with instructions for adjusting the position of the right side mirror 152 may be captured by a right side mirror camera 182; and eye gaze information with instructions for adjusting the position of the left side mirror 154 may be captured by a left side mirror camera 184. Adjusting the one or more of the rear view mirror 150, the right side mirror 152, and the left side mirror 154 using eye gaze detection is described in greater detail below in reference to FIG. 6.

In some examples, the computing system 120 may include a plurality of sub-systems or modules tasks with performing specific functions related to performing image acquisition and analysis. As used herein, the terms "system," "unit," or "module" may include a hardware and/or software system that operates to perform one or more functions. For example, a module, unit, or system may include a computer processor, controller, or other logic-based device that performs operations based on instructions stored on a tangible and non-transitory computer readable storage medium, such as a computer memory. Alternatively, a module, unit, or system may include a hard-wired device that performs operations based on hard-wired logic of the device. Various modules or units shown in the attached figures may represent the hardware that operates based on software or hardwired instructions, the software that directs hardware to perform the operations, or a combination thereof.

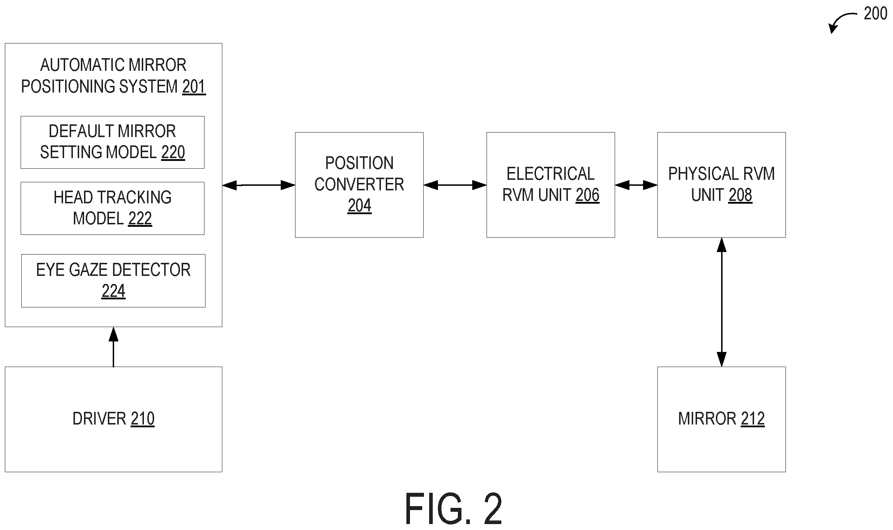

FIG. 2 shows a diagram 200 of various components of a vehicle relied on by an automatic mirror positioning system 201 for adjusting positions of one or more rear view mirrors 212 of the vehicle, which may be a non-limiting example of the automatic mirror positioning system 148 of vehicle 100 of FIG. 1. The rear view mirrors 212 may include, for example, rear view mirror 150, right side mirror 152, and left side mirror 154. The automatic mirror positioning system 201 includes three components: a default mirror setting model 220, a head tracking model 222, and an eye gaze detector 224, which are used to determine positions and orientations of the rear view mirrors 212 that increase a size of an unobstructed portion of a view by a driver 210 of a rear environment (e.g., rear environment 170) of the driver 210 and/or the vehicle. When the driver 210 enters the vehicle and turns the vehicle on, the automatic mirror positioning system 201 may use the default mirror setting model 220 to generate a set of default mirror settings for the vehicle, as described below in the method of FIG. 4. If one or more default mirror settings of driver 210 are still not ideal, the automatic mirror positioning system 201 may further adjust the positions and orientations of the rear view mirrors 212 based on tracking head movements of the driver 210 using the head tracking model 222, as described below in the method of FIG. 5, or based on tracking an eye gaze of the driver 210, using the eye gaze detector 224, as described below in the method of FIG. 6. In some embodiments, the automatic mirror positioning system 201 may output an estimated final position of one or more mirrors to be adjusted; in other embodiments, the automatic mirror positioning system 201 may output one or more directions in which to incrementally adjust the one or more mirrors 212 towards an eventual final position.

The estimated final position or the directions for the incremental adjustment may be sent to a position converter 204, which may convert the estimated final position or the directions into an electrical signal. The electrical signal may be sent to an electrical rear view mirror (RVM) unit 206 associated with a respective mirror 212, which may actuate physical RVM unit 208 associated with the respective mirror 212 to physically adjust the position of the mirror 212. Physically adjusting the position of the mirror 212 may include adjusting an orientation of the respective mirror 212 in one or more dimensions. For example, physically adjusting the position of the mirror 212 may include rotating the mirror horizontally or vertically.

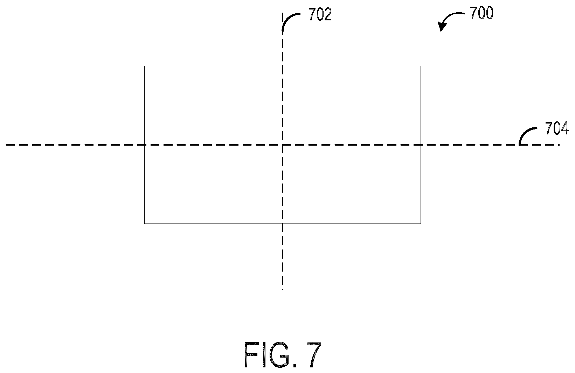

Referring to FIG. 7, a simplified mirror 700 is shown, which may be a non-limiting example of mirror 212 of FIG. 2. Mirror 700 may be rotatably integrated into a housing, such as mirror housing 156 or mirror housing 157 of FIG. 1. That is, mirror 700 may be configured to rotate around either or both of a vertical central axis 702 and a horizontal central axis 704. To adjust an orientation of mirror 700, a mirror control system (e.g., mirror control systems 151, 153, and/or 158 of FIG. 1) including a physical RVM unit (e.g., physical RVM unit 208) may be actuated to rotate the mirror 700 around the vertical central axis 702 and the horizontal central axis 704 in accordance with an electrical signal generated from an electrical RVM unit (e.g., electrical RVM unit 206). Mirror 700 may be rotated by a first angle of rotation around the vertical central axis 702, and by a second angle of rotation around the horizontal central axis 704, such that a wide range of orientations of mirror 700 may be achieved by adjusting either or both of the first angle or the second angle.

Returning to FIG. 2, it should be appreciated that data regarding a position of the mirror 212 may also be received at the automatic mirror positioning system 201, in a reverse flow of the data. That is, a position (e.g., a current position, prior to adjustment) of the mirror 212 may be specified at the physical RVM unit 208. The automatic mirror positioning system 201 may request the position of the mirror 212, and the electrical RVM unit 206 may send an electrical signal indicating the position of the mirror 212 to the automatic mirror positioning system 201 via the position converter 204.

FIG. 4 shows an exemplary high-level method 400 for automatically or semi-automatically adjusting one or more rear view mirrors of a vehicle to increase a visibility of a rear view (e.g., a view of a rear environment of the driver and/or the vehicle) of a driver of the vehicle. The one or more rear view mirrors may include outside mirrors (e.g., side mirrors) of the vehicle, and inside mirrors of the vehicle, such as the right side mirror 152, the left side mirror 154, and the rear view mirror 150, respectively, of vehicle 100 of FIG. 1. Method 400 may be performed by an automatic mirror positioning system of the vehicle, such as automatic mirror positioning system 148 and/or automatic mirror positioning system 201 of FIG. 2. Specifically, one or more steps of method 400 may be executed by a processor of a computing system of the vehicle, such as processor 142 of computing system 120 of vehicle 100, in accordance with instructions stored in a memory of the vehicle (e.g., memory 144).

Method 400 starts at 402, where method 400 includes receiving a driver-selected seat position of the driver from one or more sensors (e.g., sensor 124) of a seat of the driver (e.g., seat 104). The driver-selected seating position may be manually or automatically established by the driver when the driver sits in a driver seat of the vehicle. For example, the driver may enter the vehicle, and adjust the driver seat forward or backward based on a length of the driver's legs. Thus, a horizontal position of the driver's seat may be determined, for example, from a reference position of the driver's seat, where the reference position is defined with respect to a fixed component of the vehicle, such as a pedal of the vehicle, a central console of the vehicle, etc. The driver may adjust a height of the driver seat, for example, via mechanical or electronic controls. The driver may adjust an inclination of the driver seat, or a different positioning of the driver seat, such that the driver may comfortably operate controls of the vehicle, such as pedals, etc. The position, height, and inclination of the driver's seat may be transmitted to the automatic mirror positioning system. At 404, method 400 includes receiving a weight of the driver, where the weight is measured or estimated based on a measurement by a weight sensor of the seat.

At 406, method 400 includes determining default positions of the one or more rear view mirrors, where the default positions are positions that afford a minimally obstructed view of the rear environment of the driver and/or vehicle for an average driver having the received driver-selected seat position and received weight. In various embodiments, the default positions may be generated by a default mirror setting model (e.g., default mirror setting model 220 of FIG. 2), where the default mirror setting model is a first AI model that takes as input components of the driver-selected seat position (e.g., the seat height, the seat position, the seat inclination, etc.) and the weight of the driver, and may output the default positions.

A default position of a mirror outputted by the default mirror setting model may be defined as a set of angles from one or more reference axes of the mirror, where the default position may be achieved by rotating the mirror around the one or more reference axes by the angles, as described above in reference to FIG. 7. For example, the mirror may be rotated around a horizontal central axis of the mirror (e.g., horizontal central axis 704) in accordance with a first angle to achieve the default position, or the mirror may be rotated around the horizontal central axis of the mirror in accordance with a first angle and rotated around a vertical central axis (e.g., vertical central axis 702) of the mirror in accordance with a second angle to achieve the default position.

In some embodiments, the default mirror setting model may be a rules-based model, such as a decision tree model, generated by human experts. In other embodiments, the default mirror setting model may be a machine learning (ML) or deep learning (DL) model, such as a convolutional neural network (CNN), that is trained to output the default positions using supervised learning. For example, the default mirror setting model may be trained on training data collected from a plurality of drivers of different sizes and weights during operation of a respective plurality of vehicles. The training data may include a plurality of training pairs, where each training pair includes the seat sensor data of a driver as input data, and positions of the rear view mirrors of the driver received from as ground truth data. The training data may be collected at an end of an operation of the vehicle, when it may be assumed that the positions of the rear view mirrors have been adjusted to driver-preferred positions by the driver.

In some embodiments, additional data may be included as input data for the default mirror setting model. For example, an image of the driver captured by an in-cabin vehicle may be an additional input into the default mirror setting model, where the image may indicate a relative positioning of a head of the driver with respect to the one or more rear view mirrors. In other examples, other types of additional data may be included as input data.

At 408, method 400 includes adjusting the one or more rear view mirrors to the default positions outputted by the default mirror setting model. The default positions of the rear view mirrors may be positions at which the average driver seated in the driver-selected seating position can comfortably view the rear environment of the vehicle via the rear view mirrors. Adjusting the mirrors to the default positions may include adjusting a vertical inclination and/or a horizontal inclination of the mirror in accordance with the angles outputted by the default mirror setting model, as described above. For example, adjusting the vertical inclination of a mirror may include actuating the mirror to rotate the mirror around the horizontal central axis such that the rear view visible in the mirror is adjusted up or down, from the perspective of the driver. Adjusting the horizontal inclination of the mirror may include actuating the mirror to rotate the mirror around the vertical central axis such that the rear view visible in the mirror is adjusted to a left or to a right side, from the perspective of the driver. To adjust each mirror, the angles by which the mirror is to be rotated may be converted into an electrical signal by a position converter module of the automatic mirror positioning system, such as position converter 204 of FIG. 2. The electrical signal may be received at an electrical RVM unit (e.g., electrical RVM unit 206), which may actuate a physical RVM unit (e.g., physical RVM unit 208) to adjust the mirror to the position (e.g., inclination or orientation) specified by the angles.

At 410, method 400 includes determining whether an automatic mirror adjustment mode of the vehicle has been turned on. For example, the driver may turn on the automatic mirror adjustment mode via a control on a dashboard of the vehicle, and/or in a user interface integrated into the dashboard (e.g., UI 116). In other embodiments, the driver may turn on the automatic mirror adjustment mode via a different kind of control, such as a voice control. When the automatic mirror adjustment mode is switched on, the driver can further adjust the one or more rear view mirrors in a semi-automatic manner to fine-tune the adjustment of one or more of the rear view mirrors, as described below. For example, a default position of a rear view mirror may not afford an ideal view of the rear environment of the vehicle.

If at 410 it is determined that the mirror adjustment mode has not been turned on, method 400 proceeds to 412. At 412, method 400 includes waiting until the mirror adjustment mode is turned on, and method 400 proceeds back to 410. Alternatively, if at 410 it is determined that the mirror adjustment mode has been turned on, method 400 proceeds to 414.

At 414, method 400 includes selecting a mirror to adjust, based on a facial position and/or detected direction of an eye gaze of the driver. The facial position and/or direction of the eye gaze of the driver may be determined from an image of the driver captured by an in-cabin camera, such as a camera of a driver monitoring system (DMS) of the vehicle, using techniques known in the art. For example, if an image of the driver captured by a camera positioned in front of the driver (e.g., camera 180) indicates that the driver is looking straight ahead, it may be inferred that the driver is looking at an inside rear view mirror (e.g., mirror 150) of the vehicle. If the image of the driver indicates that the driver is looking to the left, it may be inferred that the driver is looking at a left side mirror (e.g., mirror 154) of the vehicle. If the image of the driver indicates that the driver is looking to the right, it may be inferred that the driver is looking at a right side mirror (e.g., mirror 152) of the vehicle. In other examples, cameras may be positioned at each of the right side and left side mirrors (e.g., cameras 182 and 184, respectively), and a mirror may be selected for adjustment if a corresponding camera detects that the driver is looking at the corresponding camera/selected mirror.

At 416, method 400 includes performing an adjustment of the selected mirror based on input provided by the user, where the input is received via an in-cabin camera. In some embodiments, the input may be provided as a series of head movements, or a change in a position of the head of the driver, as described below in reference to FIG. 5. In other embodiments, the input may be provided via an eye gaze of the driver, as described below in reference to FIG. 6.

At 418, method 400 includes determining whether the driver is still looking at the selected mirror, based on the image(s) received at one or more of the in-cabin cameras. If at 418 it is determined that the driver is still looking at the selected mirror, method 400 proceeds back to 416, where method 400 continues to perform the adjustment of the selected mirror based on the user input. Alternatively, if at 418 it is determined that the driver is not still looking at the mirror, method 400 proceeds to 420.

At 420, method 400 includes determining whether the driver is looking at a different mirror, based on the image(s) received at the one or more in-cabin cameras (e.g., the DMS camera). If at 420 it is determined that the driver is looking at a different mirror, method 400 proceeds back to 414, where method 400 includes selecting the mirror at which the driver is looking to be adjusted. In other words, the driver may repeatedly and/or iteratively adjust the positions of different rear view mirrors by changing their gaze from the first mirror to a second mirror.

If at 420 it is determined that the driver is not looking at a different mirror, method 400 proceeds to 422. At 422, method 400 includes determining whether a threshold amount of time has passed without the driver looking at any of the rear view mirrors (as determined via the image(s) received at the one or more in-cabin cameras). If at 422 it is determined that the threshold amount of time during which the driver is not looking at the mirrors has not passed, method 400 proceeds back to 418. In other words, method 400 may continue to monitor images of the driver to determine whether the driver is looking at any of the rear view mirrors. As long as the driver is looking at a rear view mirror, it may be inferred that the driver wishes to adjust the position of the rear view mirror. If the driver looks away from all of the mirrors, for example, during normal operation of the vehicle, it may be inferred that the driver no longer wishes to adjust the position of any of the rear view mirrors.

Thus, if at 422 it is determined that the threshold amount of time during which the driver is not looking at the mirrors has passed, method 400 proceeds to 424. At 424, method 400 includes switching off the mirror adjustment mode, and method 400 ends.

Referring now to FIG. 5, a method 500 is shown for adjusting a rear view mirror of a vehicle to increase a size of an unobstructed portion of a rear view of a driver of the vehicle, by tracking a head movement of the driver using an in-cabin camera, such as a DMS camera of the vehicle. Method 500 may be performed as part of method 400 of FIG. 4 described above, by the automatic mirror positioning system described therein. The rear view mirror may be an inside rear view mirror, or an outside (e.g., side) rear view mirror.

At 502, method 500 includes receiving a first image showing a head and face of the driver in a first driving position from the in-cabin camera. The first driving position may be a driver-preferred driving position in which the driver typically and comfortably operates the vehicle. The first driving position may indicate a desired position of the driver's head relative to the rear view mirror.

At 504, method 500 includes tracking a movement of the driver's head, and receiving a second image showing the driver's head and face at a second position where a desired view of the rear environment in the selected mirror is obtained. In other words, to indicate how the driver wishes the rear view mirror to be adjusted, the driver may move their head from the first driving position to the second position. For example, if at the first driving position the view of the rear view mirror includes portions of a ceiling of the cabin of the vehicle, the driver may move their head vertically upward until achieving the desired view of the rear environment (e.g., at the second position). Alternatively, if at the first driving position the view of the rear view mirror includes a portion of a side of the vehicle, the driver may move their head horizontally to one side until achieving the desired view of the rear environment at the second position. In some embodiments, the automatic mirror positioning system may retrieve a sequence of images captured by the in-cabin camera during which the driver is moving their head. In other embodiments, the automatic mirror positioning system may retrieve a first image of the driver's head at the first position, and a second image of the driver's head at the second position, and may not retrieve images of the drivers head between the first position and the second position.

At 506, method 500 includes calculating an adjustment to be made to a current position of the selected mirror to compensate for the movement of the driver's head, based on the first image and the second image, or the sequence of images. In various environments, the calculation of the adjustment may be performed by a head tracking model (e.g., head tracking model 222 of FIG. 2), where the head tracking model is a second AI model that takes as input the first image and a second image (or the sequence of images), and outputs a target position of the selected mirror, where the target position is defined by one or more angles by which the selected mirror should be rotated around a horizontal central axis or a vertical central axis of the selected mirror to achieve the target position from the current position.

In various embodiments, the second AI model may be an ML model trained using supervised learning on a plurality of training data pairs collected from a plurality of drivers of a plurality of vehicles. Each training data pair may include as input data a first training image of a driver of the plurality of drivers in a first position that is typical for the driver for operating a respective vehicle (e.g., where a head of the driver is positioned such that a view ahead of the driver is comfortably obtained), a second training image of the driver in a second position at which a desired view of a rear environment of the vehicle via a mirror of the vehicle is achieved by the driver, and a current position of the mirror (e.g., with respect to a reference position). In other words, the second position is different from the first position when the mirror is not adjusted such that the driver achieves the desired view of the rear environment of the vehicle. To achieve the desired view, the driver adjusts their position from the first position to the second position. For example, adjusting from the first position to the second position may include raising or lowering a position of the driver's head; leaning forward or backward, or inclining or tilting the driver's head in a direction, or a different movement of the driver's head or face. Each training pair may also include a desired position of the mirror as ground truth data, where the desired position of the mirror is a position at which the driver obtains the desired view of the rear environment while the driver is in the first position typical for the driver for operating the respective vehicle.

The training data may be collected in accordance with a training procedure in which a plurality of drivers sit in one or more vehicles in which one or more rear view mirrors of the vehicle are in different, predefined positions that are not adjusted to the driver. For each driver, the first training image of the driver is collected via an in-cabin camera where the driver is in the first position, the second training image of the driver is collected via the in-cabin camera where the driver is in the second position. The driver may then be asked to adjust the one or more rear view mirrors to an ideal position of the driver such that the desired view of the rear environment of the vehicle is achieved while the driver is in the first position, and the adjusted mirror positions are stored as ground truth data. As described above, in some embodiments, a plurality of images of the driver may additionally be collected as the driver moves from the first position to the second position. During training, the ML model may implement one or more gradient descent algorithms and apply one or more loss functions to iteratively adjust parameters of the ML model until the ML model has been trained.

At 508, method 500 includes adjusting the selected mirror to the target position outputted by the head tracking model, using a respective mirror control system of the selected mirror (e.g., mirror control systems 151, 153, and 158 of FIG. 1, and/or position converter 204, electrical RVM unit 206, and physical RVM unit 208 of FIG. 2). The adjustment of the selected mirror may be performed as described above at step 408 of FIG. 4. Method 500 ends.

Referring now to FIG. 6, a method 600 is shown for adjusting a rear view mirror of one or more rear view mirrors of a vehicle to increase a size of an unobstructed portion of a rear view of a driver of the vehicle, by tracking an eye gaze of the driver using an in-cabin camera of the vehicle, such as cameras 180, 182, and 184 of FIG. 1. Method 600 may be performed as part of method 400 of FIG. 4 described above, by the automatic mirror positioning system described therein, where method 600 describes an alternative method to method 500 of FIG. 5 for fine-tuning an adjustment of the one or more rear view mirrors of the vehicle. The rear view mirror may be an inside rear view mirror, or an outside (e.g., side) rear view mirror.

Method 600 begins at 602, where method 600 includes detecting an eye gaze of the driver in a direction of the mirror. The eye gaze may be detected by an eye gaze detector of the automatic mirror positioning system, such as eye gaze detector 202 of FIG. 2. That is, the eye gaze detector may receive an image of the driver captured by a camera integrated into the vehicle, and the eye gaze detector may determine from the image that the eye gaze is focused on the mirror, based on technologies known in the art.

The camera at which the eye gaze is detected may vary depending on the selected mirror. In some embodiments, a central camera (e.g., camera 180) may capture the images analyzed by the eye gaze detector. In other embodiments, each mirror may have a corresponding camera integrated into the vehicle and positioned proximate to the mirror. Thus, when the driver is looking at a selected mirror, the eye gaze of the driver may be detected from images received by the respective camera of the selected mirror.

At 604, method 600 includes determining whether the eye gaze is directed at a top portion or edge of the mirror. If at 610 it is determined that the eye gaze is directed at the top portion or edge of the mirror, method 600 proceeds to 606. At 606, method 600 includes adjusting the mirror by rotating the mirror vertically in an upward direction (e.g., as if the driver manually pushed the top edge of the mirror in), and method 600 proceeds to 612. Alternatively, if at 604 it is determined that the eye gaze is not directed at the top portion or edge of the mirror, method 600 proceeds to 608.

At 608, method 600 includes determining whether the eye gaze is directed at a bottom portion or edge of the mirror. If at 610 it is determined that the eye gaze is directed at the bottom portion or edge of the mirror, method 600 proceeds to 610. At 610, method 600 includes adjusting the mirror by rotating the mirror vertically in a downward direction, and method 600 proceeds to 612. Alternatively, if at 608 it is determined that the eye gaze is not directed at the bottom portion or edge of the mirror, method 600 proceeds to 612.

At 612, method 600 includes determining whether the eye gaze is directed at a left portion or edge of the mirror. If at 610 it is determined that the eye gaze is directed at the left portion or edge of the mirror, method 600 proceeds to 614. At 614, method 600 includes adjusting the mirror by rotating the mirror horizontally in a leftward direction, and method 600 proceeds to 620. Alternatively, if at 612 it is determined that the eye gaze is not directed at the left portion or edge of the mirror, method 600 proceeds to 616.

At 616, method 600 includes determining whether the eye gaze is directed at a right portion or edge of the mirror. If at 616 it is determined that the eye gaze is directed at the right portion or edge of the mirror, method 600 proceeds to 618. At 618, method 600 includes adjusting the mirror by rotating the mirror horizontally in a rightward direction, and method 600 proceeds to 620. Alternatively, if at 616 it is determined that the eye gaze is not directed at the right portion or edge of the mirror, method 600 proceeds to 620.

At 620, method 600 includes determining whether the eye gaze is still directed at any portion of the mirror. If at 620 it is determined that the eye gaze is still directed at a portion of the mirror, method 600 proceeds back to 604, and steps 604-618 may be performed a subsequent time to continue to adjust the position of the mirror. Alternatively, if at 620 it is determined that the eye gaze is not directed at any portion of the mirror, method 600 proceeds to 622. At 622, method 600 includes ending the adjustment of the mirror, and method 600 ends.

As an example of how method 600 may be used, the driver may enter the vehicle and adjust the seat to a driver-preferred position, as described above. The driver may then consider positions of various mirrors included in the vehicle, such as the rear view mirror and the side mirrors. The driver may see that the various mirrors are not in ideal positions for viewing the rear environment of the vehicle. As a result, the driver may select a control on the dashboard, or issue a voice control, to turn on the automatic mirror adjustment mode. An indication may be displayed on the dashboard that the automatic mirror adjustment mode has been turned on. The driver may then focus the eye gaze of the driver on each of the various mirrors in turn, and for each mirror of the various mirrors, the driver may indicate a direction in which the mirror should be adjusted, such as up, down, right, or left, by directing the driver's gaze at a relevant edge of the mirror. When the driver's gaze is detected by the automatic mirror positioning system, an incremental adjustment may be performed to the position of the mirror, to increase a visibility of the rear environment via the mirror. When the driver continues to direct the gaze at a same edge, a plurality of incremental adjustments may be performed. When the driver directs the eye gaze away from the mirror, no further adjustments of the mirror may be made, and the driver may turn to a different mirror. When the driver directs the eye gaze away from all of the various mirrors for a threshold amount of time, the automatic mirror adjustment mode may be turned off. In this way, the positions of the various mirrors may each be adjusted until the driver has determined that a desired visibility of the rear environment has been achieved.

In various embodiments, the mirror may be adjusted in a corresponding direction by a predefined increment of movement, and one or more steps of method 600 may be repeated or performed in an iterative manner, to adjust the mirror to a desired position. For example, the driver may focus the driver's eye gaze on an edge of a mirror to adjust the mirror towards a desired position; the driver may then continue to focus the driver's eye gaze on the same edge to continue to adjust the mirror towards the desired position, until the desired position has been achieved.

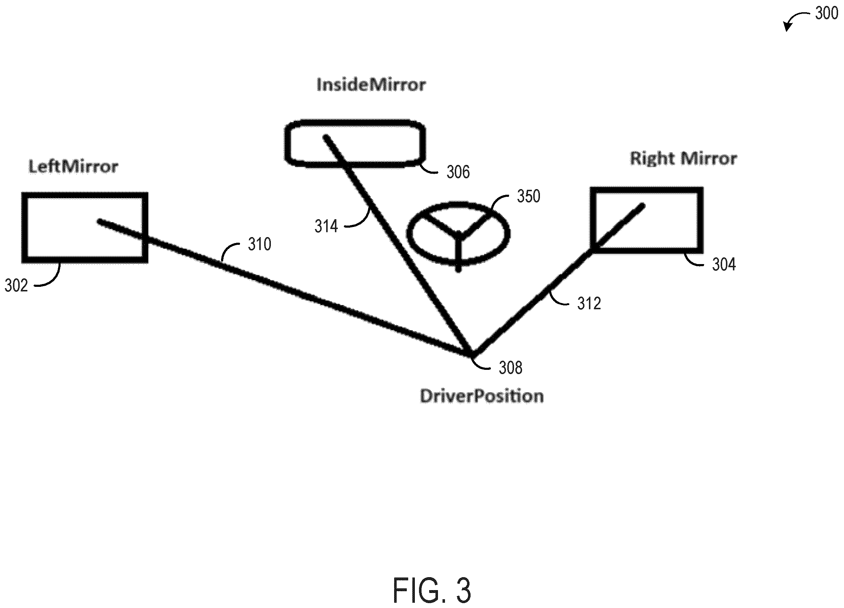

Referring now to FIG. 3, an eye gaze diagram 300 depicts a positioning of various mirrors of a vehicle, including a left mirror 302, a right mirror 304, and an inside mirror 306, with respect to a position 308 of eyes of a driver of the vehicle. The left mirror 302, the right mirror 304, and the inside mirror 306 may be non-limiting examples of right side mirror 152, left side mirror 154, and rear view mirror 150 of vehicle 100 of FIG. 1. The eye gaze used by the automatic mirror positioning system 201 described above may be received while the driver is looking at each of the left mirror 302, the right mirror 304, and the inside mirror 306. A steering wheel 350 is shown as a positional reference.

The driver may make a first eye gaze in a first direction 310 at left mirror 302. A first camera may capture a first image of the first eye gaze of the driver. The eye gaze detector 202 may detect the first eye gaze at the left mirror 302 in the first image, and the automatic mirror positioning system 201 may adjust the position of the left mirror 302 using a mirror control system (e.g., mirror control systems 151, 153, and/or 158) including the position converter 204, the electrical RVM unit 206, and the physical RVM unit 208 of FIG. 2 based on the first eye gaze.

The driver may then make a second eye gaze in a second direction 312 at the right mirror 304. A second camera may capture a second image of the second eye gaze, where the second camera may be the same as the first camera, or a different camera. The eye gaze detector may detect the second eye gaze of the driver at the right mirror 304 in the second image, and the automatic mirror positioning system 201 may adjust the position of the right mirror 304 using the position converter 204, the electrical RVM unit 206, and the physical RVM unit 208 based on the second eye gaze.

The driver may then may make a third eye gaze in a third direction 314 at the inside mirror 306. A third camera may capture a third image of the third eye gaze, where the third camera may be the same as the first and/or second cameras, or a different camera. The eye gaze detector may capture the third eye gaze of the driver at the inside mirror 306, and the automatic mirror positioning system 201 may adjust the position of the inside mirror 306 using the position converter 204, the electrical RVM unit 206, and the physical RVM unit 208 based on the third eye gaze. In this way, the driver may advantageously use the automatic mirror positioning system 201 to set desired positions of a plurality of rear and/or side view mirrors of the vehicle using eye gaze, rather than by adjusting controls of the plurality of rear and/or side view mirror manually via dashboard, virtual, or other controls.

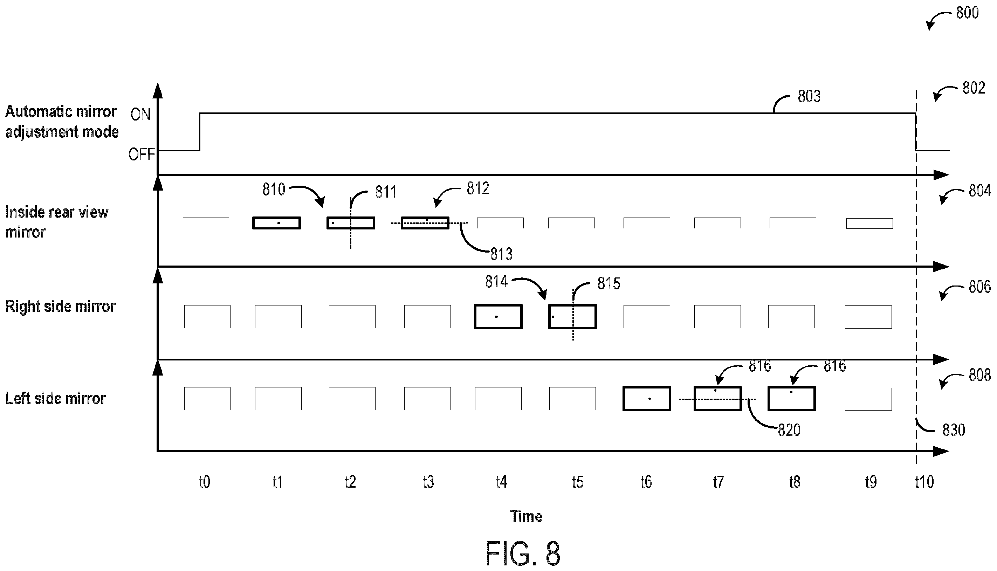

Referring now to FIG. 8, a timing diagram 800 is shown that illustrates a sequence of actions of a driver of a vehicle as the driver adjusts an inside rear view mirror, a right side mirror, and a left side mirror of the vehicle, using an automatic mirror positioning system (automatic mirror positioning system 201) in accordance with method 600 described above. The horizontal (x) axis denotes time, where t1-t10 identify significant times in the sequence of actions.

The timing diagram 800 includes four plots. A first plot 802 shows a line 803 that indicates a state of an automatic mirror adjustment mode of the vehicle, which may be ON or OFF; a second plot 804 shows a focus of an eye gaze on the inside rear view mirror; a third plot 806 shows a focus of an eye gaze on the right side mirror; and a fourth plot 808 shows a focus of an eye gaze on the left side mirror. For each of plots 804, 806, and 808, a respective mirror is depicted as a rectangle, and the focus of the eye gaze within the respective mirror is depicted as a black dot. When the driver is not focusing the eye gaze on a respective mirror, no black dot is depicted.

At time t0, the driver is seated in a driver's seat of the vehicle (e.g., seat 104). The inside rear view mirror, the right side mirror, and the left side mirror are all in positions that are not adjusted to the driver, where a size of an unobstructed view of a rear environment of the vehicle via the mirrors is less than desired. To increase the size of the unobstructed view of the rear environment, the driver switches the automatic mirror adjustment mode ON. For example, the driver may switch the automatic mirror adjustment mode ON using a voice command received at a microphone of the vehicle, such as microphone 181 of FIG. 1. An eye gaze of the driver is not focused on any of the inside rear view mirror, the right side mirror, and the left side mirror.

At a time t1, the driver focuses their eye gaze on the inside rear view mirror. The eye gaze is detected in an image captured by an in-cabin camera of the vehicle (e.g., camera 180) by an eye gaze detector (e.g., eye gaze detector 224), which may determine a location at which the eye gaze is focused. As a result of the eye gaze detector detecting the focus of the eye gaze on the inside rear view mirror, the inside rear view mirror is selected for adjustment, as indicated by a darker border in FIG. 8. The eye gaze may be focused at any location within the inside rear view mirror to select the inside rear view mirror.

At a time t2, the driver focuses their eye gaze on a left edge 810 of the inside rear view mirror. As a result of the eye gaze detector detecting the focus of the eye gaze on the left edge 810, the automatic mirror positioning system automatically adjusts the inside rear view mirror via a mirror control system (e.g., mirror control system 158) of the inside rear view mirror, which rotates the inside rear view mirror horizontally to the left, meaning, clockwise around a vertical axis 811 of the inside rear view mirror. The inside rear view mirror is adjusted horizontally to the left by a predefined increment of movement (e.g., a predefined angle of movement, for example). After the predefined increment of movement has been made to the inside rear view mirror, the inside rear view mirror is horizontally adjusted to the driver.

At a time t3, the driver focuses their eye gaze on a top edge 812 of the inside rear view mirror. As a result of the eye gaze detector detecting the focus of the eye gaze on the top edge 812, the automatic mirror positioning system automatically adjusts the inside rear view mirror via the mirror control system, rotating the inside rear view mirror vertically upward, meaning, clockwise around a horizontal axis 813 of the inside rear view mirror (from a right side perspective of the inside rear view mirror). The inside rear view mirror is adjusted vertically upward by the predefined increment of movement. After the predefined increment of movement has been made to the inside rear view mirror, the inside rear view mirror is vertically adjusted to the driver.

At a time t4, the driver focuses their eye gaze on the right side mirror. As a result of the eye gaze detector detecting the focus of the eye gaze on the right side mirror, the right side mirror is selected for adjustment, as indicated by the darker border. The eye gaze may be focused at any location within the right side mirror to select the right side mirror.

At a time t5, the driver focuses their eye gaze on a left edge 814 of the right side mirror. As a result of the eye gaze detector detecting the focus of the eye gaze on the left edge 814, the automatic mirror positioning system automatically adjusts the right side mirror, rotating the right side mirror horizontally to the left, meaning, clockwise around a vertical axis 815 of the right side mirror. The right side mirror is adjusted horizontally to the left by the predefined increment of movement. After the predefined increment of movement has been made to the right side mirror, the right side mirror is horizontally adjusted to the driver. The right side mirror may be vertically adjusted to the driver, whereby no further adjustment may be performed on the right side mirror.

At a time t6, the driver focuses their eye gaze on the left side mirror. As a result of the eye gaze detector detecting the focus of the eye gaze on the left side mirror, the left side mirror is selected for adjustment, as indicated by the darker border. The eye gaze may be focused at any location within the left side mirror to select the left side mirror.

At a time t7 the driver focuses their eye gaze on a top edge 816 of the left side mirror. As a result of the eye gaze detector detecting the focus of the eye gaze on the top edge 816, the automatic mirror positioning system automatically adjusts the left side mirror via the mirror control system, rotating the left side mirror vertically upward, meaning, clockwise around a horizontal axis 820 of the inside rear view mirror (from a right side perspective of the inside rear view mirror). The left side mirror is adjusted vertically upward by the predefined increment of movement.

However, after the predefined increment of movement has been made to the left side mirror at time t7, the left side mirror is still not vertically adjusted to the driver. As a result, at time t8, the driver continues to focus their eye gaze on the top edge 816 of the left side mirror. The eye gaze detector continues to detect the focus of the eye gaze on the top edge 816, and as a result, the automatic mirror positioning system automatically adjusts the left side mirror to rotate the left side mirror vertically upward for a second predefined increment of movement. After the second predefined increment of movement has been made to the left side mirror, the left side mirror is vertically adjusted to the driver. The left side mirror may be horizontally adjusted to the driver, whereby no further adjustment may be performed on the left side mirror.

At a time t9, as a result of all of the inside rear view mirror, the right side mirror, and the left side mirror being horizontally and vertically adjusted to the driver, a size of an unobstructed view of a rear environment of the driver and/or vehicle may be increased or maximized. As a result, the driver moves the focus of their eye gaze away from all of the inside rear view mirror, the right side mirror, and the left side mirror. Between the time t9 and a time t10, The driver maintains the focus of their eye gaze away from all of the inside rear view mirror, the right side mirror, and the left side mirror

At the time t10, as a result of the driver maintaining the focus of their eye gaze away from all of the inside rear view mirror, the right side mirror, and the left side mirror for a threshold amount of time (e.g., an increment of time between time t9 and time t10), the automatic mirror positioning system automatically switches the automatic mirror adjustment mode OFF, as indicated by a dashed line 830. Alternatively, in some embodiments, the automatic mirror adjustment mode may be switched OFF by the driver, via a voice command in or a different manner.

Thus, by directing an eye gaze of the driver selectively at a portion of a rear view mirror located at an edge of the rear view mirror, the driver may indicate to the automatic mirror positioning system how the rear view mirror should be adjusted to increase the size of the unobstructed view of the rear environment of the driver. In various embodiments, a size or precision of the portion may differ, or may depend on a precision of the eye gaze detector. In this way, a hands-free option is presented for adjusting mirrors of a vehicle that may be performed more quickly and efficiently than a manual adjustment of the mirrors. As a second hands-free option, when the driver initiates the automatic mirror adjustment mode, an AI model may be advantageously employed to determine suitable or ideal positions of the rear view mirrors by tracking how the driver moves their head to accommodate a poorly positioned mirror. In some embodiments, a head tracking model may even be used to adjust one or more rear view mirrors unobtrusively (e.g., in the background) based on detected movements while the driver operates the vehicle during normal operation. Either of the first or second hands-free options may be performed after the automatic mirror positioning system performs an initial, default adjustment of the mirrors based on physical characteristics of the driver inferred by a seat configuration of the driver, other sensor data of the vehicle, and/or images of the driver captured via the in-cabin camera. As a result, the size of the unobstructed view of the rear environment of the driver may be increased with respect to an alternate scenario where a manual adjustment of the mirrors by the driver is relied on. Additionally, a presence, size, and/or extent of blind spots of the driver may be reduced, increasing a safety of the driver and reducing a risk of accidents.

The technical effect of automatically adjusting one or more rear view mirrors of a vehicle is that a size of an unobstructed view of a rear environment of a driver of the vehicle may be increased and a size, extent, and/or presence of blind spots may be reduced, increasing a safety of the driver and reducing a risk of accidents.

The disclosure also provides support for an automatic mirror positioning system of a vehicle, comprising: a processor, and instructions stored in a memory of the vehicle that when executed, cause the processor to: when a driver of the vehicle is seated in the vehicle: receive a driver-selected seat position and a weight of the driver from sensors of a seat of a driver of the vehicle, adjust one or more rear view mirrors of the vehicle to default mirror positions for the driver based on the received driver-selected seat position and weight, the default mirror positions increasing a size of an unobstructed portion of a rear environment of the driver and/or vehicle for an average driver having the received driver-selected seat position and received weight, and in response to receiving a selection of an automatic mirror adjustment mode of the vehicle by the driver, further adjust the one or more rear view mirrors based on a visual input of the driver captured by an in-camera vehicle. In a first example of the system, the one or more rear view mirrors include an inside rear view mirror and a side mirror of the vehicle. In a second example of the system, optionally including the first example, the driver-selected seat position includes one or more of a height of the driver's seat, an inclination of the driver's seat, and a horizontal position of the driver's seat. In a third example of the system, optionally including one or both of the first and second examples, further instructions are stored in the memory that when executed, cause the processor to input one or more of the height of the driver's seat, the inclination of the driver's seat, the position of the driver's seat, and the weight of the driver into a first AI model, and receive as an output of the first AI model one or more angles to rotate a mirror of the one or more rear view mirrors around one or more central axes of the mirror to achieve the default mirror positions. In a fourth example of the system, optionally including one or more or each of the first through third examples, further instructions are stored in the memory that when executed, cause the processor to: receive from the driver a selection of a rear view mirror of the one or more rear view mirrors to be adjusted, the selection determined based on an image of a head and face of the driver captured by an in-cabin camera as the driver looks at the selected rear view mirror. In a fifth example of the system, optionally including one or more or each of the first through fourth examples, further instructions are stored in the memory that when executed, cause the processor to: receive a first image of a head and face of the driver from the in-cabin camera while the driver is in a driver-preferred driving position, receive a second image of the head and face of the driver from the in-cabin camera when a desired view of the rear view mirror is obtained by the driver, calculate an adjustment to the selected rear view mirror based on a difference between the first image and the second image, and adjust the selected mirror to the desired position using a mirror control system of the vehicle. In a sixth example of the system, optionally including one or more or each of the first through fifth examples, the adjustment to the selected rear view mirror is calculated by a second AI model trained to take as input the first image and the second image, and output one or more angles to rotate the selected mirror around one or more central axes of the selected mirror to achieve the desired position. In a seventh example of the system, optionally including one or more or each of the first through sixth examples, further instructions are stored in the memory that when executed, cause the processor to: detect an eye gaze of the driver while the driver is looking at the selected mirror, via an in-cabin camera positioned proximate the selected mirror, while the eye gaze is detected at the selected mirror: in response to detecting the eye gaze at a top portion of the selected mirror, adjust the selected mirror by rotating the selected mirror around a horizontal central axis of the selected mirror in an upward direction by predefined increments, in response to detecting the eye gaze at a bottom portion of the selected mirror, adjust the selected mirror by rotating the selected mirror around the horizontal central axis of the selected mirror in a downward direction by predefined increments, in response to detecting the eye gaze at a left side of the selected mirror, adjust the selected mirror by rotating the selected mirror around a vertical central axis of the selected mirror in a leftward direction by predefined increments, in response to detecting the eye gaze at a right side of the selected mirror, adjust the selected mirror by rotating the selected mirror around the vertical central axis of the selected mirror in a rightward direction by predefined increments, and and in response to not detecting the eye gaze at the selected mirror, stop rotating the selected mirror. In a eighth example of the system, optionally including one or more or each of the first through seventh examples, further instructions are stored in the memory that when executed, cause the processor to: in response to not detecting the eye gaze at any of the one or more rear view mirrors for a threshold amount of time, switch off the automatic mirror adjustment mode.

The disclosure also provides support for a method, comprising: adjusting one or more rear view mirrors of a vehicle to default mirror positions for a driver seated in the vehicle, based on sensor data received from a seat of the driver while the driver is seated in the vehicle, the sensor data including one or more of a height of the seat of the driver, an inclination of the seat of the driver, a position of the seat of the driver with respect to a reference position of the seat of the driver, and a weight of the driver, and in response to receiving a selection of an automatic mirror adjustment mode of the vehicle by the driver, further adjusting the one or more rear view mirrors based on a visual input of the driver captured by an in-camera vehicle. In a first example of the method, the one or more rear view mirrors include one or more of an inside rear view mirror, a right side mirror of the vehicle, and a left side mirror of the vehicle. In a second example of the method, optionally including the first example, adjusting the one or more rear view mirrors of the vehicle to the default mirror positions for the driver based on the sensor data further comprises inputting the sensor data into a first AI model, and receiving as an output of the first AI model one or more angles to rotate a mirror of the one or more rear view mirrors around one or more central axes of the mirror to achieve a default position of the mirror. In a third example of the method, optionally including one or both of the first and second examples, adjusting the one or more rear view mirrors to the default mirror positions based on the sensor data further comprises inputting the sensor data into a first AI model, and receiving as an output of the first AI model a first angle to rotate the mirror around a horizontal central axis of the mirror and a second angle to rotate the mirror around a vertical central axis of the mirror to achieve the default position of the mirror. In a fourth example of the method, optionally including one or more or each of the first through third examples, further adjusting the one or more rear view mirrors based on the visual input of the driver captured by an in-camera vehicle further comprises: selecting a mirror of the one or more rear view mirrors at which the driver is looking based on a first image of a head and face of the driver captured by an in-cabin camera, receiving a second image of a head and face of the driver from the in-cabin camera while the driver is in a driver-preferred driving position, receiving, after the driver moves their head to obtain a desired view of a rear environment of the driver and/or vehicle via the selected mirror, a third image of the head and face of the driver from the in-cabin camera when the desired view of the rear environment is obtained, calculating an adjustment to the selected mirror based on a difference between the second image and the third image, and performing the adjustment to the selected mirror using a mirror control system of the vehicle. In a fifth example of the method, optionally including one or more or each of the first through fourth examples, calculating the adjustment to the selected mirror based on the difference between the second image and the third image further comprises inputting the second image and the third image into a second AI model, and receiving as an output of the second AI model one or more angles to rotate the selected mirror around one or more central axes of the selected mirror to achieve a target position that increases a size of an unobstructed portion of a view of the rear environment for the driver. In a sixth example of the method, optionally including one or more or each of the first through fifth examples, the second AI model is a machine learning (ML) model trained, using supervised learning, on a plurality of training data pairs, each training data pair including a first training image of a sample driver of a sample vehicle in a first position typical for the sample driver for operating the sample vehicle, and a second training image of the driver in a second position at which a desired view of a rear environment of the sample vehicle via a mirror of the sample vehicle is achieved by the sample driver, and a current position of the mirror as input data, and a desired position of the mirror for the sample driver as ground truth data. In a seventh example of the method, optionally including one or more or each of the first through sixth examples, the method further comprises: receiving a sequence of images of the driver from the in-cabin camera, the sequence beginning with the second image and ending with the third image, wherein the second AI model takes the sequence of images as input data, and outputs the one or more angles to rotate the selected mirror based on the sequence of images. In a eighth example of the method, optionally including one or more or each of the first through seventh examples, further adjusting the one or more rear view mirrors based on the visual input of the driver captured by an in-camera vehicle further comprises: selecting a mirror of the one or more rear view mirrors at which the driver is looking based on a first image of a head and face of the driver captured by a first in-cabin camera, detecting an eye gaze of the driver at the selected mirror while the driver is looking at the selected mirror, via a second in-cabin camera positioned proximate the selected mirror, in response to detecting the eye gaze at an edge of the selected mirror, adjusting the selected mirror by incrementally rotating the selected mirror around a central axis of the selected mirror towards the edge, until the eye gaze is no longer detected at the edge, and in response to not detecting the eye gaze at any of the one or more rear view mirrors for a threshold amount of time, switching off the automatic mirror adjustment mode.

The disclosure also provides support for an automatic mirror positioning system of a vehicle, comprising: a rear view mirror, and an electrical rear view mirror (RVM) unit and a physical RVM unit of the rear view mirror, a processor, and instructions stored in a memory of the vehicle that when executed, cause the processor to: send an electrical signal to the electrical RVM to actuate the physical RVM unit to adjust a position of the rear view mirror, the electrical signal encoding one or more angles to rotate the rear view mirror around one or more central axes of the rear view mirror, the one or more angles generated by one of: a default mirror setting model that outputs the one or more angles based on sensor data of a seat of a driver of the vehicle while the driver is sitting in the vehicle, a head tracking model that outputs the one or more angles based on a first image of a head and face of the driver captured by an in-cabin camera of the vehicle while the driver is in a driver-preferred driving position, and a second image of the head and face of the driver captured by the in-cabin camera when a desired view of the rear view mirror is obtained by the driver, and the automatic mirror positioning system based on a direction of an eye gaze of the driver detected by an eye gaze detector as the driver is looking at the rear view mirror. In a first example of the system, the electrical signal further includes an encoding of a predefined increment at which the rear view mirror is rotated.

When introducing elements of various embodiments of the present disclosure, the articles "a," "an," and "the" are intended to mean that there are one or more of the elements. The terms "first," "second," and the like, do not denote any order, quantity, or importance, but rather are used to distinguish one element from another. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object. In addition, it should be understood that references to "one embodiment" or "an embodiment" of the present disclosure are not intended to be interpreted as excluding the existence of additional embodiments that also incorporate the recited features.

In addition to any previously indicated modification, numerous other variations and alternative arrangements may be devised by those skilled in the art without departing from the spirit and scope of this description, and appended claims are intended to cover such modifications and arrangements. Thus, while the information enhancement described above with particularity and detail in connection with what is presently deemed to be the most practical and preferred aspects, it will be apparent to those of ordinary skill in the art that numerous modifications, including, but not limited to, form, function, manner of operation and use may be made without departing from the principles and concepts set forth herein. Also, as used herein, the examples and embodiments, in all respects, are meant to be illustrative only and should not be construed to be limiting in any manner.

## Claims

1. An automatic mirror positioning system (201) of a vehicle (100), comprising:
a processor, and instructions stored in a memory of the vehicle (100) that when executed, cause the processor to:
when a driver (210) of the vehicle (100) is seated in the vehicle (100):
receive a driver-selected seat position and a weight of the driver (210) from sensors of a seat of a driver (210) of the vehicle (100);
adjust one or more rear view mirrors (150, 212, 306) of the vehicle (100) to default mirror positions for the driver (210) based on the received driver-selected seat position and weight, the default mirror positions increasing a size of an unobstructed portion of a rear environment of the driver (210) and/or vehicle (100) for an average driver (210) having the received driver-selected seat position and received weight; and
in response to receiving a selection of an automatic mirror adjustment mode of the vehicle (100) by the driver (210), further adjust the one or more rear view mirrors (150, 212, 306) based on a visual input of the driver (210) captured by an in-camera vehicle.

2. The automatic mirror positioning system (201) of claim 1, wherein the one or more rear view mirrors (150, 212, 306) include an inside rear view mirror (150, 306) and a side mirror (302, 304) of the vehicle (100).

3. The automatic mirror positioning system (201) of claim 1, wherein the driver-selected seat position includes one or more of a height of the driver's seat, an inclination of the driver's seat, and a horizontal position of the driver's seat.

4. The automatic mirror positioning system (201) of claim 3, wherein further instructions are stored in the memory that when executed, cause the processor to input one or more of the height of the driver's seat (104), the inclination of the driver's seat (104), the position of the driver's seat (104), and the weight of the driver (210) into a first AI model (220), and receive as an output of the first AI model (220) one or more angles to rotate a mirror of the one or more rear view mirrors (150, 212, 306) around one or more central axes of the mirror (150, 212, 306) to achieve the default mirror positions.

5. The automatic mirror positioning system (201) of claim 1, wherein further instructions are stored in the memory that when executed, cause the processor to:
receive from the driver (210) a selection of a rear view mirror (150, 212, 306) of the one or more rear view mirrors (150, 212, 306) to be adjusted, the selection determined based on an image of a head and face of the driver (210) captured by an in-cabin camera (180) as the driver (210) looks at the selected rear view mirror (150, 212, 306).

6. The automatic mirror positioning system (201) of claim 5, wherein further instructions are stored in the memory that when executed, cause the processor to:
receive a first image of a head and face of the driver (210) from the in-cabin camera while the driver (210) is in a driver-preferred driving position;
receive a second image of the head and face of the driver (210) from the in-cabin camera (180) when a desired view of the rear view mirror (150, 212, 306) is obtained by the driver (210);
calculate an adjustment to the selected rear view mirror (150, 212, 306) based on a difference between the first image and the second image; and
adjust the selected mirror (150, 212, 306) to the desired position using a mirror control system of the vehicle (100).

7. The automatic mirror positioning system (201) of claim 6, wherein the adjustment to the selected rear view mirror (150, 212, 306) is calculated by a second AI model trained to take as input the first image and the second image, and output one or more angles to rotate the selected mirror (150, 212, 306) around one or more central axes of the selected mirror (150, 212, 306) to achieve the desired position.

8. The automatic mirror positioning system (201) of claim 5, wherein further instructions are stored in the memory that when executed, cause the processor to:
detect an eye gaze of the driver (210) while the driver (210) is looking at the selected mirror, via an in-cabin camera (180) positioned proximate the selected mirror (150, 212, 306);
while the eye gaze is detected at the selected mirror (150, 212, 306):
in response to detecting the eye gaze at a top portion of the selected mirror (150, 212, 306), adjust the selected mirror (150, 212, 306) by rotating the selected mirror around a horizontal central axis of the selected mirror (150, 212, 306) in an upward direction by predefined increments;
in response to detecting the eye gaze at a bottom portion of the selected mirror, adjust the selected mirror (150, 212, 306) by rotating the selected mirror (150, 212, 306) around the horizontal central axis of the selected mirror (150, 212, 306) in a downward direction by predefined increments;
in response to detecting the eye gaze at a left side of the selected mirror (150, 212, 306), adjust the selected mirror (150, 212, 306) by rotating the selected mirror around a vertical central axis of the selected mirror (150, 212, 306) in a leftward direction by predefined increments;
in response to detecting the eye gaze at a right side of the selected mirror (150, 212, 306), adjust the selected mirror (150, 212, 306) by rotating the selected mirror around the vertical central axis of the selected mirror (150, 212, 306) in a rightward direction by predefined increments; and
and in response to not detecting the eye gaze at the selected mirror (150, 212, 306), stop rotating the selected mirror (150, 212, 306).

9. The automatic mirror positioning system (201) of claim 8, wherein further instructions are stored in the memory that when executed, cause the processor to:
in response to not detecting the eye gaze at any of the one or more rear view mirrors (150, 212, 306) for a threshold amount of time, switch off the automatic mirror adjustment mode.

10. A method, comprising:
adjusting one or more rear view mirrors of a vehicle to default mirror positions for a driver seated in the vehicle (408), based on sensor data received from a seat of the driver while the driver is seated in the vehicle, the sensor data including one or more of a height of the seat of the driver, an inclination of the seat of the driver, a position of the seat of the driver with respect to a reference position of the seat of the driver, and a weight of the driver; and
in response to receiving a selection of an automatic mirror adjustment mode of the vehicle by the driver, further adjusting the one or more rear view mirrors based on a visual input of the driver captured by an in-camera vehicle (416).

11. The method of claim 10, wherein the one or more rear view mirrors include one or more of an inside rear view mirror, a right side mirror of the vehicle, and a left side mirror of the vehicle.

12. The method of claim 10, wherein adjusting the one or more rear view mirrors of the vehicle to the default mirror positions for the driver based on the sensor data further comprises inputting the sensor data into a first AI model, and receiving as an output of the first AI model one or more angles to rotate a mirror of the one or more rear view mirrors around one or more central axes of the mirror to achieve a default position of the mirror.

13. The method of claim 12, wherein adjusting the one or more rear view mirrors to the default mirror positions based on the sensor data further comprises inputting the sensor data into a first AI model, and receiving as an output of the first AI model a first angle to rotate the mirror around a horizontal central axis of the mirror and a second angle to rotate the mirror around a vertical central axis of the mirror to achieve the default position of the mirror.

14. The method of claim 10, wherein further adjusting the one or more rear view mirrors based on the visual input of the driver captured by an in-camera vehicle further comprises:
selecting a mirror of the one or more rear view mirrors at which the driver is looking based on a first image of a head and face of the driver captured by an in-cabin camera (414);
receiving a second image of a head and face of the driver from the in-cabin camera while the driver is in a driver-preferred driving position (502);
receiving, after the driver moves their head to obtain a desired view of a rear environment of the driver and/or vehicle via the selected mirror, a third image of the head and face of the driver from the in-cabin camera when the desired view of the rear environment is obtained (504);
calculating an adjustment to the selected mirror based on a difference between the second image and the third image (506); and
performing the adjustment to the selected mirror using a mirror control system of the vehicle (508).

15. The method of claim 14, wherein calculating the adjustment to the selected mirror based on the difference between the second image and the third image further comprises inputting the second image and the third image into a second AI model, and receiving as an output of the second AI model one or more angles to rotate the selected mirror around one or more central axes of the selected mirror to achieve a target position that increases a size of an unobstructed portion of a view of the rear environment for the driver.
